# EUROPÄISCHE PATENTSCHRIFT

(11) **EP 0 824 818 B1**
(45) Veröffentlichungstag und Bekanntmachung des Hinweises auf die Patenterteilung: **18.05.2005**
(21) Anmeldenummer: 97904537.4
(22) Anmeldetag: 27.02.1997
(51) Int. Cl.: H04L 27/16

(54) **ERZEUGUNG EINES FREQUENZSTEUERSIGNALS IN EINEM FSK-EMPFÄNGER**
PRODUCTION OF A FREQUENCY CONTROL SIGNAL IN AN FSK RECEIVER
PRODUCTION D'UN SIGNAL DE COMMANDE DE FREQUENCE DANS UN RECEPTEUR A GAMME DE FREQUENCES

(30) Priorität: 02.03.1996 DE 19608068
(43) Veröffentlichungstag der Anmeldung: 25.02.1998
(73) Patentinhaber: Koninklijke Philips Electronics N.V., 5621 BA Eindhoven (NL); Philips Intellectual Property & Standards GmbH, 20099 Hamburg (DE)
(72) Erfinder: BIEHL, Manfred, NL-5656 AA Eindhoven (NL); JANSEN, Winfried, NL-5656 AA Eindhoven (NL); PILASKI, Ralf, NL-5656 AA Eindhoven (NL)
(74) Vertreter: Peters, Carl Heinrich, Dipl.-Ing.
(86) Internationale Anmeldenummer: PCT/IB1997/000181
(87) Internationale Veröffentlichungsnummer: WO 1997/032422

(56) Entgegenhaltungen:
- EP-A- 0 141 466
- EP-A- 0 405 676
- DE-A- 2 508 540
- DE-A- 3 324 311
- FR-A- 2 308 245
- GB-A- 2 137 836
- PATENT ABSTRACTS OF JAPAN vol. 017, no. 508 (E-1431), 13.September 1993 & JP 05 130071 A (MATSUSHITA), 25.Mai 1993,

## Beschreibung

Schaltungsanordnung zum Erzeugen eines Steuersignals sowie Verwendung einer derartigen Schaltungsanordnung in einem Funkempfänger

Die Erfindung bezieht sich auf eine Schaltungsanordnung zum Erzeugen eines Steuersignals nach dem Oberbegriff des unabhängigen Anspruchs 1 sowie auf eine Verwendung einer derartigen Schaltungsanordnung in einem Funkempfänger.

Aus der EP-A 0 160 339 ist eine Schaltungsanordnung für einen FM-Empfänger bekannt, der zum Empfangen direkt modulierter Datensignale eingerichtet ist. Diese Schaltungsanordnung weist einen Lokaloszillator auf, dessen Frequenz auf der Frequenzskala zwischen zwei Signalfrequenzen angeordnet ist. Insbesondere ist die bekannte Schaltungsanordnung zum Empfangen und Demodulieren von FSK-modulierten Signalen eingerichtet, wie sie bei digitalen Funkrufempfängern ("Pager") zur Anwendung kommen.

Die aus der EP-A 0 160 339 bekannte Schaltungsanordnung enthält einen Mischer, in dem von einer Antenne kommende Signale mit dem Signal eines Lokaloszillators herabgemischt werden. In einem dem Mischer nachgeschalteten Kanalfilter, ausgebildet als Tief- oder Bandpaß, wird das Ausgangssignal des Mischers gefiltert und einer Stufe zugeleitet, deren Übertragungsfunktion die Charakteristik eines Frequenzdiskriminators aufweist. Dessen Ausgangssignal wird über einen Verstärker und einen Tiefpaß als Steuersignal dem Lokaloszillator zum Nachsteuern seiner Frequenz zugeführt. Aus dem Aufsatz "Zwei ICs für einen Pager" von Stefan Drude, Funkschau, Heft 26, 1989, Seiten 69 bis 76, ist ein Empfänger-Baustein mit der Typenbezeichnung UAA2050T für einen Funkrufempfänger bekannt, der mit direkter Frequenzumtastung, d.h. mit FSK-Modulation, arbeitet. Ein mit diesem Empfänger-Baustein aufgebauter Funkrufempfänger enthält eine automatische Frequenznachregelung (AFC) zum Ausgleich von Temperaturschwankungen und Alterungseinflüssen.

Aus der DE 25 08 540 A 1 ist eine Anordnung zum Gewinnen des Referenzträgers für die pseudokohärente Demodulation eines vierphasenumgetasteten Datensignals mittels zweier Demodulatoren, denen das empfangene Datensignal und der um +45° bzw. -45° phasenverschobene Referenzträger zugeführt wird, bekannt. Dabei wird dieser Referenzträger von einem phasengeregelten Oszillator geliefert, dessen in Abhängigkeit von den Ausgangssignalen der beiden Demodulatoren phasenverschobenes Ausgangssignal mit dem empfangenen Datensignal in der Phase verglichen wird. Das bei diesem Phasenvergleich gewonnene Differenzsignal wird nach Durchlaufen eines Tiefpaßfilters zum Nachregeln des Oszillators verwendet. Ein Teil des Differenzsignales in der Nähe des Abtastzeitpunktes wird mittels einer Schalteinrichtung ausgetastet, und nur dieser ausgetastete Wert wird zum Nachstellen des phasengeregelten Oszillators verwendet.

Aus der DE-A-29 42 512 ist ein Funkempfänger zum Empfangen von FSK-modulierten Funksignalen über eine Antenne bekannt. Die Funksignale enthalten zwei Empfangsfrequenzen, die um jeweils den Hub der FSK-Modulation oberhalb und unterhalb der Frequenz eines HF-Trägers angeordnet sind. Diese Funksignale werden zwei hochverstärkenden Mischern zugeführt. Ein Mischoszillator schwingt mit der Frequenz des HF-Trägers. Sein Signal wird dem ersten der hochverstärkenden Mischer direkt und dem zweiten der hochverstärkenden Mischer über ein 90°-Phasendrehglied zugeführt. Die Ausgänge der Mischer sind mit je einem Tiefpaßfilter verbunden. Die gefilterten Signale gelangen dann auf je einen hochverstärkenden Begrenzerverstärker. Die Ausgänge der Begrenzerverstärker liefern rechteckförmige Signale. Dabei eilt das Signal am Ausgang eines der Begrenzerverstärker dem Signal am Ausgang des anderen Begrenzerverstärkers vor oder nach, je nachdem, ob das Eingangssignal an der Antenne eine tiefere oder höhere Frequenz als der Mischoszillator aufweist. Diese beiden möglichen Zustände werden von einem D-Flipflop erkannt, welches entsprechend in jeweils einen seiner zwei möglichen Zustände umgeschaltet wird.

Ein ideales Empfangssignal für einen derartigen Funkempfänger, beispielsweise einen Pager, ändert seine Frequenz zwischen den beiden möglichen Werten, d.h. den beiden möglichen Frequenzen der empfangenen Funksignale, die in der Datenkodierung der Funksignale auch als Sendersignal "Ziffer 1" bzw. "Ziffer 0" bezeichnet werden können, schlagartig. In der Realität liegt jedoch nicht dieses ideale Signal vor, vielmehr benötigt das Sendersignal eine endliche Dauer für die Umstellung von der einen auf die andere Frequenz. Entsprechend vergeht beim Umschalten im demodulierten Signal von einem auf den anderen Zustand eine endliche Zeit. Es zeigt sich, daß während dieser Zeit eine gültige Frequenzmessung nicht möglich ist. In dieser als Übergangsintervall bezeichneten Zeit ist nicht nur eine Zuordnung der übertragenen Funksignale zu einem der Datenwerte "Ziffer 1" bzw. "Ziffer 0" erschwert, sondern insbesondere die Erzeugung des Steuersignals für den steuerbaren Oszillator. Dieses Steuersignal muß nämlich für eine korrekte Steuerung der Frequenz des Oszillators dem Hub der FSK-Modulation entsprechen. Während des Übergangsintervalls, d.h. während des Zeitintervalls, in dem das aus dem Empfangsignal gewonnene Datensignal seinen Wert ändert, wird jedoch ein Steuersignal erzeugt, welches nicht mehr dem Hub der FSK-Modulation entspricht, sondern vorzugsweise einer geringeren Frequenzdifferenz. Dies führt zu einem irrtümlichen Nachsteuern der Frequenz des Oszillators während der Übergangsintervalle.

Der damit verbundene Fehler tritt besonders bei hohen Informations-Übertragungsraten im Empfangssignal mit entsprechend zeitlich sehr kurzen Informationseinheiten (bits) auf. Die Übergangsintervalle nehmen dann nämlich einen beträchtlichen Teil der Gesamtdauer des einzelnen bits ein. Dadurch erhöht sich die Gefahr, daß durch Erzeugen eines fehlerhaften Steuersignals die Frequenzsteuerung des Oszillators in ihrer Wirkungsweise gestört wird. Es treten dann im Datenempfang des Funkempfängers vermehrt Fehler auf, die vermieden werden müssen, um eine geforderte niedrige Bitfehlerrate des Funkempfängers (beispielsweise Pagers) nicht zu überschreiten.

Aufgrund der Empfangsfrequenzen heutiger Funkempfänger (Pager) von beispielsweise etwa 930 MHz werden an die Kurzzeitstabilität und auch an die Langzeitstabilität der Frequenz des Oszillators der Empfangsanordnung sehr hohe Anforderungen gestellt. Kann der Oszillator diese Anforderungen nicht erfüllen, führt dies unweigerlich zu einem Rückgang der Empfindlichkeit bis hin zum Ausfall des Empfangs.

Die Erfindung hat die Aufgabe, eine Schaltungsanordnung zum Erzeugen eines Steuersignals für einen steuerbaren Oszillator einer Empfangsanordnung der vorstehend beschriebenen Art zu schaffen, bei der das Steuersignal durch die genannten Störungen im Übergangsintervall nicht beeinflußt wird.

Erfindungsgemäß wird diese Aufgabe bei einer Schaltungsanordnung der gattungsgemäßen Art gelöst durch die kennzeichnenden Merkmale des unabhängigen Anspruchs 1.

Durch die erfindungsgemäße Schaltungsanordnung wird somit während des Übergangsintervalls das Empfangssignal für die Frequenzmessung, d.h. für die Erzeugung des Steuersignals für den steuerbaren Oszillator, ausgeblendet. Dadurch werden die Übergangsintervalle als Fehlerquelle für die Erzeugung des Steuersignals wirksam beseitigt.

In einer vorteilhaften Ausgestaltung der erfindungsgemäßen Schaltungsanordnung wird das Steuersignal durch zeitliche Mittelung einer Folge des kontinuierlich aus dem Demodulator-Impulssignal abgeleiteter Steuersignalwerte gebildet, und die Steuersignalwerte aus dem Übergangsintervall werden von der Mittelung ausgeschlossen. Hierdurch wird eine doppelte Störsicherheit erreicht; zum einen verringert die diskontinuierliche Ableitung den Einfluß von Störungen auf die Steuersignalwerte, zum anderen werden zusätzlich die während der Übergangsintervalle erzeugten Steuersignalwerte verworfen. Dies ist mit einer sehr einfachen Schaltungsanordnung erreichbar.

In einer bevorzugten Fortbildung der Erfindung umfaßt das Demodulator-Impulssignal eine Folge von Impulsen, deren Folgefrequenz ein ganzzeiliges Vielfaches der Zwischenfrequenz ist. Die Steuersignalwerte werden dann durch Messung des zeitlichen Abstandes aufeinander folgender Impulse gebildet. Diese Messung kann insbesondere in einer Integrationsstufe erfolgen, in der in jedem der Zeiträume zwischen zwei aufeinanderfolgenden Impulsen des Demodulator-Impulssignals ein Signal mit konstantem Pegel integriert wird. Der aufintegrierte Wert des Signals mit konstantem Pegel am Ende des jeweiligen Zeitraumes stellt dann den jeweiligen Steuersignalwert dar.

In der vorliegenden Erfindung umfaßt der Unterbrechungssignal-Erzeugungszweig eine Signaländerungs-Detektionsstufe und eine damit gekoppelte Impulsformstufe. Die Signaländerungs-Detektionsstufe dient zum Detektieren der Änderungen des Wertes des Datensignals und kann bevorzugt eine Differenzierstufe umfassen. Eine solche Stufe liefert immer dann ein Ausgangssignal, wenn sich der Augenblickswert eines ihr zugeführten Eingangssignals zeitlich ändert. Die Impulsformstufe dient zum Bilden eines impulsförmigen Unterbrechungssignals, welches sich über die Übergangsintervalle erstreckt. Dieses Unterbrechungssignal kann unmittelbar zum Ausblenden der unerwünschten, weil fehlerbehafteten demodulierten Empfangssignale in der erfindungsgemäßen Schaltungsanordnung herangezogen werden.

Die Signaländerungs-Detektionsstufe kann vorteilhaft eine der Differenzierstufe nachgeordnete Gleichrichterstufe umfassen. Diese dient der Betragsbildung des von der Differenzierstufe abgegebenen Signals, d.h. zur Vorzeichenentfernung, da zur Erkennung eines Übergangintervalls lediglich eine Änderung des Wertes des Datensignals, jedoch nicht deren Richtung, erkannt werden muß.

Ein Ausführungsbeispiel der erfindungsgemäßen Schaltungsanordnung ist in der Zeichnung dargestellt und wird im Nachfolgenden näher beschrieben. Es zeigen
Fig. 1 ein Blockschaltbild einer Anordnung zum Ableiten eines Demodulator-Impulssignals und eines Datensignals aus einem Zwischenfrequenzsignal, wie sie zusammen mit der erfindungsgemäßen Schaltungsanordnung zum Erzeugen eines Steuersignals für einen steuerbaren Oszillator eingesetzt werden kann,
Fig. 2 die zeitlichen Verläufe von Signalen in der Anordnung nach Fig. 1 im Betrieb,
Fig. 3 ein Blockschaltbild eines Ausführungsbeispiels der erfindungsgemäßen Schaltungsanordnung,
Fig. 4 ein Beispiel für experimentell ermittelte zeitliche Verläufe in einer Empfangsanordnung, mit der die erfindungsgemäße Schaltungsanordnung eingesetzt wird,
Fig. 5 und 6 Beispiele für gemessene Frequenz-Spannungs-Charakteristiken einer Frequenzregelung für einen steuerbaren Oszillator in einer erfindungsgemäßen Schaltungsanordnung.

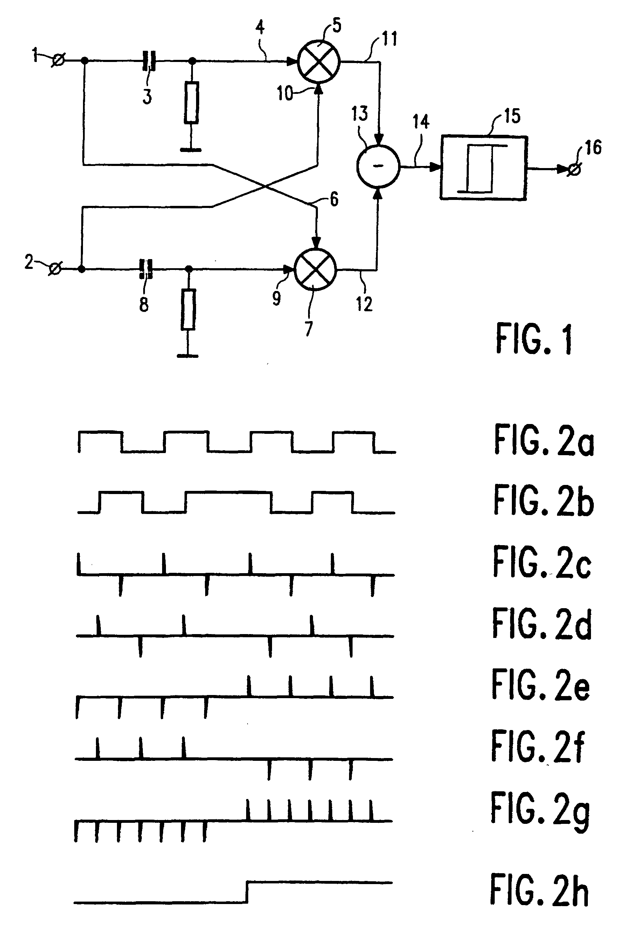

Die Anordnung nach Fig. 1 bildet innerhalb einer Empfangsanordnung für ein FSK-moduliertes Eingangssignal eine Dekodierstufe, mit der aus einem Zwischenfrequenzsignal ein Datensignal und ein Demodulator-Impulssignal abgeleitet werden können. Dazu werden zwei Eingangsanschlüsse 1,2 der Dekodierstufe nach Fig. 1 mit Ausgangsanschlüssen eines Quadraturdemodulators verbunden, der durch Herabmischen des FSK-modulierten Eingangssignals mit der Schwingung vom steuerbaren Oszillator zwei um 90° phasenverschobene Rechteckschwingungen liefert. Einen derartigen Quadraturdemodulator stellt beispielsweise die aus DE-A 29 42 512, Fig. 1, bekannte Schaltungsanordnung dar. Sie liefert an den Ausgängen B,A der Begrenzerverstärker 8 bzw. 7 zwei einander um 90° vor- bzw. nacheilende Rechteckschwingungen, die das Zwischenfrequenzsignal bilden. Der Ausgang B des Begrenzerverstärkers 8 nach Fig. 1 der DE-A 29 42 512 ist mit dem ersten Eingangsanschluß 1 der Dekodierstufe nach Fig. 1 des vorliegenden Ausführungsbeispiels zu verbinden. Entsprechend wird der Ausgang A des Begrenzerverstärkers 7 nach dem Stand der Technik mit dem zweiten Eingangsanschluß 2 der Dekodierstufe gemäß der vorliegenden Fig. 1 verbunden. Für ein Betriebsbeispiel sind in Fig. 2 a) eine dem ersten Eingangsanschluß 1 zugeführte Rechteckschwingung und in Fig. 2b) eine dem zweiten Eingangsanschluß 2 zugeführte Rechteckschwingung dargestellt.

Der erste Eingangsanschluß 1 der Dekodierstufe nach Fig. 1 ist über einen ersten RC-Hochpaß 3 an einen ersten Eingang 4 eines ersten Mischers 5 und unmittelbar an einen zweiten Eingang 6 eines zweiten Mischers 7 angeschlossen. Entsprechend ist der zweite Eingangsanschluß 2 über einen zweiten RC-Hochpaß 8 an einen ersten Eingang 9 des zweiten Mischers 7 und unmittelbar an einen zweiten Eingang 10 des ersten Mischers 5 angeschlossen. Die Ausgänge 11 bzw. 12 der Mischer 5 bzw. 7 sind mit je einem Eingang einer Subtrahierstufe 13 verbunden. In der Subtrahierstufe 13 wird das Signal vom Ausgang 12 des zweiten Mischers 7 von dem Signal am Ausgang 11 des ersten Mischers 5 subtrahiert. Das aus dieser Subtraktion resultierende Signal erscheint am Ausgang 14 der Subtrahierstufe 13 als Demodulator-Impulssignal. Über eine Kippstufe 15 mit Schsnitt-Trigger-Verhalten mit dem Bezugszeichen 15 wird daraus das Datensignal abgeleitet, welches am Ausgang 16 der Kippstufe 15 abgegeben wird.

Die Signalverläufe nach Fig. 2 stellen die Vorgänge bei einem idealen Empfangssignal für einen Pager in einem Zeitabschnitt dar, in welchem es seine Frequenz zwischen zwei Werten schlagartig ändert. Zum Zeitpunkt dieser Frequenzänderung wechselt die Phasenlage zwischen den Rechtecksignalen an den Eingangsanschlüssen 1 und 2 der Dekodierstufe nach Fig. 1. Dies geschieht durch einen Phasensprung im Signal am zweiten Eingangsanschluß 2 gemäß Fig. 2 b).

Durch die RC-Hochpässe 3, 8, die wie Differenzierglieder wirken, werden den ersten Eingängen 4 bzw. 9 der Mischer 5 bzw. 7 zu jeder Flanke der Signale an den Eingangsanschlüssen 1 bzw. 2 kurze Impulse (Nadelimpulse) zugeleitet, deren Polarität wechselt, je nachdem, ob es sich um eine ansteigende oder abfallende Flanke handelt. Diese Nadelimpulse sind in den Fig. 2 c) für den ersten Eingang 4 des ersten Mischers 5 und in Fig. 2d) für den ersten Eingang 9 des zweiten Mischers 7 dargestellt. Ihre Phasenlage folgt der Phasenlage der Signale an den Eingangsanschlüssen 1,2. Anschließend wird nun im ersten Mischer 5 die Reihe der Nadelimpulse am ersten Eingang 4 mit dem Signal vom zweiten Eingangsanschluß 2 multipliziert, welches dem zweiten Eingang 10 des ersten Mischers 5 zugeleitet wird. Entsprechend erfolgt im zweiten Mischer 7 eine Multiplikation der Nadelimpulsreihe am ersten Eingang 9 des zweiten Mischers 7 mit dem Signal vom ersten Eingangsanschluß 1, welches über den zweiten Eingang 6 des zweiten Mischers 7 zugeführt wird. Am Ausgang 11 des ersten Mischers 5 entsteht dann die in Fig. 2 e) dargestellte Nadelimpulsreihe mit für jeweils eine Phasenlage zwischen den Signalen an den Eingangsanschlüssen 1,2 durchgehend übereinstimmender Polarität. Eine entsprechend geformte Nadelimpulsreihe gemäß Fig. 2 f) entsteht am Ausgang 12 des zweiten Mischers 7. Durch Subtraktion der Nadelimpulsreihe aus Fig. 2 f) von derjenigen aus Fig. 2 e) in der Subtrahierstufe 13 wird an deren Ausgang 14 die Nadelimpulsreihe gemäß Fig. 2 g) gebildet. Diese weist zu jeder Flanke in den Signalen an den Eingangsanschlüssen 1,2 einen Nadelimpuls auf; die Polarität der Nadelimpulse wechselt mit dem Wechsel der Phasenlagen zwischen den Signalen an den Eingangsanschlüssen 1,2. Durch die Kippstufe 15 mit Schmitt-Trigger-Verhalten wird aus dem Signal gemäß Fig. 2 g) das Signal nach Fig. 2 h) geformt. Darin repräsentiert jeder der Signalpegel einen Wert der Frequenzen des Empfangssignals.

Im folgenden wird das Signal gemäß Fig. 2 g) als Demodulator-Impulssignal, dasjenige gemäß Fig. 2 h) als Datensignal bezeichnet.

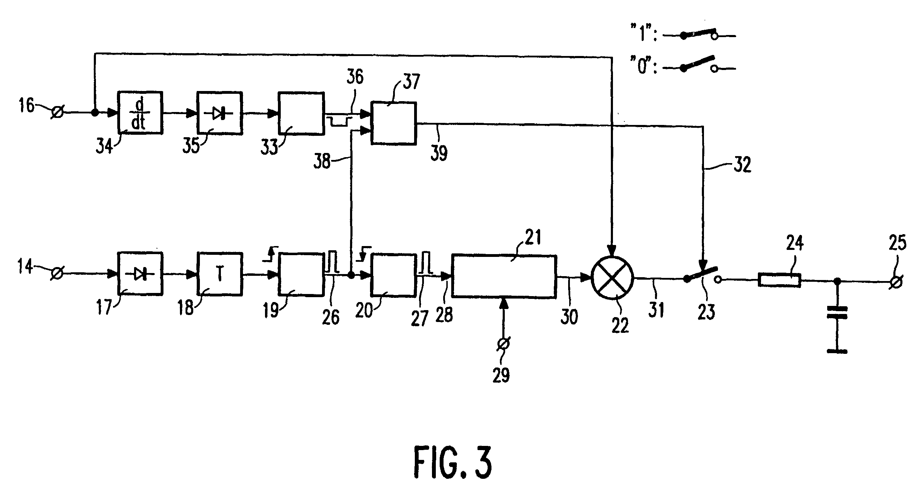

Fig. 3 zeigt ein Ausführungsbeispiel einer erfindungsgemäßen Schaltungsanordnung zum Erzeugen eines Steuersignals für einen steuerbaren Oszillator eines Funkempfängers, wie er im vorstehenden vorausgesetzt bzw. beschrieben worden ist. Der Einfachheit halber ist auch dieses Beispiel entsprechend der Schaltungsanordnung nach Fig. 1 für eine sogenannte zweilagige FSK-Modulation ausgelegt, bei der das Empfangssignal zwischen zwei verschiedenen Frequenzen umschaltet. Jedoch ist die Anwendung der Erfindung nicht auf ein solches zweilagiges FSK-Signal beschränkt, sondern ebenso für mehrlagige FSK-Modulation geeignet.

Die beschriebene Schaltungsanordnung ist bevorzugt einsetzbar für eine automatische Frequenzregelung ( "AFC") in einem Funkempfänger; sie regelt die Frequenz des steuerbaren Oszillators in der Empfangsanordnung auf den Mittelwert der beiden durch die FSK-Modulation vor bestimmten Eingangsfrequenzen. Dies ist zugleich die Trägerfrequenz des FSK-modulierten Sendersignals.

Bei einer automatischen Frequenzregelung der vorausgesetzten Art, wie sie im eingangs zitierten Aufsatz aus "Funkschau" beschrieben ist, werden die Zwischenfrequenzen als Information für den Frequenzabstand zwischen der Frequenz des Oszillators und den Eingangsfrequenzen herangezogen. Die Zwischenfrequenzen unterliegen jedoch auch den Einflüssen der Modulation. Bei den aus der eingangs zitierten Literatur bekannten Frequenzregelungen kann dies zu falschen Informationen hinsichtlich der benötigten Nachsteuerung der Frequenz des Oszillators führen. Die Bedingungen, unter denen die falschen Informationen auftreten, sind von der verwendeten Datenrate im Eingangssignal, von der Phasenlage zwischen Datenwechseln und den Zwischenfrequenzen abhängig. Einen weiteren Einfluß üben auch die sogenannten Splatterfilter im Sender aus, die der Bandbegrenzung des übertragenen und damit empfangenen Signals dienen. Eine der in diesem Zusammenhang wesentlichsten Eigenschaften des Splatterfilters ist die Tatsache, daß das Signal nach einer Bearbeitung durch das Splatterfilter nicht mehr sprungartig seine Frequenz ändert. Das Splatterfilter trägt somit zur Ausdehnung der Übergangsintervalle und damit ggf. zur Vermehrung der Störungen, wie sie eingangs beschrieben wurden, bei.

Die Meßfehler, die die falschen Informationen hinsichtlich der benötigten Frequenzkorrektur der Frequenz des steuerbaren Oszillators beinhalten, haben durch die Vielzahl der unterschiedlichen Einflüsse eine stark zufällige Ausprägung und sind in ihrer Auswirkung schwer einschätzbar, weil auch Fehler hinsichtlich der Richtung der benötigten Korrektur der Frequenz des Oszillators nicht auszuschließen sind. Fehler hinsichtlich der Richtung der Frequenzkorrektur können jedoch leicht dazu führen, daß die Frequenz des Oszillators den Frequenzbereich zwischen den Eingangsfrequenzen verläßt. Eine derartige Verschiebung der Frequenz des Oszillators führt jedoch in der Regel zu einer völligen Zerstörung der empfangenen Daten und ist daher auf jeden Fall zu vermeiden.

Vielmehr ist bei einem Funkempfänger (Pager) beispielsweise eine Bitfehlerrate von 3% nicht zu überschreiten.

Bei der erfindungsgemäßen Schaltungsanordnung wird das Übergangsintervall, in welchem der Datenwechsel - d. h. der Wechsel der Eingangsfrequenz - stattfindet, detektiert. Alle Meßinformationen, die während dieser Übergangsintervalle entstehen, werden verworfen. Benutzt wird die Information aus den Zwischenfrequenzen nur dann, wenn die Eingangsfrequenz für einen der Datenwerte einen stationären Zustand angenommen hat.

Die Schaltungsanordnung nach Fig. 3 enthält einen Steuersignal-Erzeugungszweig, in dem in Kettenschaltung nacheinander eine Gleichrichterstufe 17, ein Verzögerungsglied 18, eine erste Impulsformstufe 19, eine zweite Impulsformstufe 20, eine Integrationsstufe 21, ein Mischer 22, eine als Schalter dargestellte Austaststufe 23 und ein RC-Tiefpaß 24 angeordnet sind. Der Eingang der Gleichrichterstufe 17 ist mit dem Ausgang 14 der Subtrahierstufe 13 gemäß Fig. 1 verbunden und erhält das Demodulator-Impulssignal zugeführt. Dieses wird in der Gleichrichterstufe 17 gleichgerichtet, d.h. alle Nadelimpulse des Signalverlaufs nach Fig. 2 g) erhalten eine einheitliche, vom jeweiligen Wert des Datensignals nach Fig. 2 h) unabhängige Polarität. Im dargestellten Beispiel ist dies die positive Polarität. Die Gleichrichterstufe 17 "entfernt" somit das Vorzeichen aus dem Signal gemäß Fig. 2 g); sie bildet den Betrag des Demodulator-Impulssignals. Über das Verzögerungsglied 18 wird mit diesem Betragssignal der Eingang der ersten Impulsformstufe 19 angesteuert. Die erste Impulsformstufe 19 umfaßt eine monostabile Kippschaltung, die an ihrem Ausgang 26 zu jeder ansteigenden Flanke des Betragssignals von der Gleichrichterstufe 17 bzw. dem Verzögerungsglied 18 einen Rechteckimpuls vorbestimmter Dauer abgibt. Dessen rückwärtige Flanke löst in der zweiten Impulsformstufe 20 an deren Ausgang 27 die Abgabe eines zweiten Rechteckimpulses aus, der sich zeitlich an den ersten Rechteckimpuls am Ausgang 26 der ersten Impulsformstufe 19 anschließt. Dieser zweite Rechteckimpuls vom Ausgang 27 der zweiten Impulsformstufe 20 wird einem Rücksetzeingang 28 der Integrationsstufe 21 zugeleitet. Die Integrationsstufe 21 erhält weiterhin über einen Bezugswerteingang 29 ein Signal mit konstantem Pegel zugeleitet. Dieses wird in der Integrationsstufe 21 fortwährend aufintegriert und das so gebildete Integral als Signalwert (bzw. Pegel) am Ausgang 30 der Integrationsstufe 21 abgegeben. Mit jedem Rechteckimpuls, der dem Rücksetzeingang 28 der Integrationsstufe 21 zufließt, wird der Signalwert am Ausgang 30 auf einen Anfangswert zurückgesetzt und beginnt von da an neu anzusteigen. Der Signalwert am Ausgang 30 ist somit ein unmittelbares Maß für den Zeitraum, der seit Eintreffen des letzten Reckeckimpulses am Rücksetzeingang 28 vergangen ist. Unmittelbar vor Eintreffen des nachfolgenden Rechteckimpulses am Rücksetzeingang 28 stellt der Signalwert am Ausgang 30 somit ein Maß für den zeitlichen Abstand zweier Nadelimpulse aus dem Demodulator-Impulssignal dar. Der Signalwert am Ausgang 30 ist somit ein Abbild der Frequenz des Zwischenfrequenzsignals. Er verändert sich mit der Frequenz des steuerbaren Oszillators und kann daher als Steuersignal für die Steuerung der Frequenz dieses Oszillators herangezogen werden. Dazu wird er zunächst im Mischer 22 mit dem Datensignal vom Ausgang 16 der Kippstufe 15 gemischt, wozu dieser Ausgang 16 sowie der Ausgang 30 der Integrationsstufe 21 mit je einem Eingang des Mischers 22 verbunden sind. Durch die Mischung des Signalwertes vom Ausgang 30 der Integrationsstufe 21 mit dem Datensignal vom Ausgang 16 der Kippstufe 15 wird entsprechend dem Wert des empfangenen Datensignals dem Signalwert vom Ausgang 30 eine Polarität gegeben, durch die die Richtung der Steuerung bzw. Korrektur der Frequenz des Oszillators eingestellt wird.

Die Austaststufe 23 weist einen Steuereingang 32 auf, dem ein Signal mit hohem logischem Pegel (" 1") zuzuführen ist, wenn die Austaststufe 23 eine leitende Verbindung zwischen dem Ausgang 31 des Mischers 22 und dem RC-Tiefpaß 24 herstellen soll. In Fig. 3 ist dazu der Ausgang 26 der ersten Impulsformstufe 19 mit dem Steuereingang 32 verbunden; der erste Rechteckimpuls schafft somit diese Verbindung. Dem RC-Tiefpaß 24 wird somit unmittelbar vor dem Rücksetzen der Integrationsstufe 21 über den zweiten Rechteckimpuls am Rücksetzeingang 28 der dann erreichte Signalwert vom Ausgang 30, gemischt mit dem Datensignal (über den Mischer 22) in Form eines Abtastwertes zugeführt. Mit anderen Worten erhält der RC-Tiefpaß 24 über die Austaststufe 23 nacheinander die Meßwerte für die Zeitdauer zwischen je zwei Impulsen des Demodulator-Impulssignals, d.h. diskontinuierliche Frequenzmeßwerte des Zwischenfrequenzsignals. Diese Meßwerte werden im RC-Tiefpaß 24 tiefpaßgefiltert und am Ausgang 25 des RC-Tiefpasses 24 als Steuersignal für den Oszillator bereitgestellt. Die Funktionsweise dieser Schaltung entspricht einer gewichteten Abtastung.

Fig. 3 zeigt ferner einen Unterbrechungssignal-Erzeugungszweig, der sich an den Ausgang 16 der Kippstufe 15 anschließt und eine Signaländerungs-Detektionsstufe sowie eine mit dieser gekoppelte (dritte) Impulsformstufe 33 enthält. Die Signaländerungs-Detektionsstufe umfaßt eine Differenzierstufe 34 und eine dieser nachgeordnete (zweite) Gleichrichterstufe 35. Die Impulsformstufe 33, die Differenzierstufe 34 und die Gleichrichterstufe 35 sind an den Ausgang 16 der Kippstufe 15 in Kettenschaltung angeschlossen.

Die Differenzierstufe 34 dient der Erkennung von Signalwertänderungen im Datensignal. Das von ihr abgegebene Signal folgt in seiner Polarität der Richtung der Signalwertänderung des Datensignals. Da diese für den vorliegenden Zweck unbedeutend ist, wird daraus in der Gleichrichterstufe 35 eine Impulsfolge gleichbleibender Polarität erzeugt, also auch hier das Vorzeichen eliminiert. In der Impulsformstufe 33 wird durch jeden der Impulse von der Gleichrichterstufe 35 ein Impuls vorbestimmter Dauer erzeugt, der im vorliegenden Beispiel eine negative Polarität (bzw. einen niedrigen Signalpegel) aufweist. Dieser Impuls dient als Unterbrechungssignal und wird von der Impulsformstufe 33 einem ersten Eingang 36 einer Unterbrechungsstufe 37 zugeführt. Diese ist bevorzugt als UND-Gatter ausgebildet und mit ihrem zweiten Eingang 38 an den Ausgang 26 der ersten Impulsformstufe 19 angeschlossen. Ein Ausgang 39 der Unterbrechungsstufe 37 ist mit dem Steuereingang 32 der Austaststufe 22 verbunden.

Bei konstantem Wert des Datensignals am Ausgang 16 der Kippstufe 15 liegt am ersten Eingang 36 der Unterbrechungsstufe 37 unverändert ein logischer Pegel " 1 " an. Die Unterbrechungsstufe 37 ist damit für die ersten Rechteckimpulse vom Ausgang 26 der ersten Impulsformstufe 19 kontinuierlich durchgängig. Damit können zu jedem Nadelimpuls des Demodulator-Impulssignals über die Integrationsstufe 21 und die Austaststufe 23 Meßwerte für die Erzeugung des Steuersignals am Ausgang 25 des RC-Tiefpasses 24 gewonnen werden. Beim Auftreten eines Unterbrechungssignals, d.h. während der Übergangsintervalle, in denen das Datensignal seinen Wert ändert, entsteht am ersten Eingang 36 der Unterbrechungsstufe 37 ein niedriger Signalpegel (logischer Wert "0"). Dadurch wird die Weiterleitung der ersten Rechteckimpulse von der ersten Impulsformstufe 19 an die Austaststufe 23 unterbrochen. In den Übergangsintervallen werden somit keine Meßwerte an den RC-Tiefpaß 24 übertragen, so daß der von diesem gespeicherte Wert des Steuersignals während der Übergangsintervalle nicht beeinflußt und damit auch nicht verfälscht werden kann.

Das Verzögerungsglied 18 bewirkt dabei eine zeitliche Verzögerung der Signale im Steuersignal-Erzeugungszweig, durch die sichergestellt wird, daß das Unterbrechungssignal rechtzeitig der Unterbrechungsstufe 37 zugeführt wird, d.h. vor Auftreten des ersten in das Übergangsintervall fallenden ersten Rechteckimpulses von der ersten Impulsformstufe 19. Die Länge des impulsförmigen Unterbrechungssignals, vorzugsweise bestimmt durch eine monostabile Kippstufe in der (dritten) Impulsformstufe 33, ist derart bemessen, daß entsprechend den empfangenen Signalen die Übergangsintervalle sich überdeckt werden.

Die Integrationsstufe 21 kann derart ausgebildet sein, daß der Signalwert an ihrem Ausgang 30 bei einem voreingestellten Endwert verharrt, wenn der zeitliche Abstand zweier aufeinanderfolgender Nadelimpulse im Demodulator-Impulssignal zu groß wird. Die Signalpegel können derart eingestellt werden, daß bei korrekter Einstellung der Frequenz des Oszillators auf die Trägerfrequenz der empfangenen Signale der Signalwert am Ausgang 30 der Integrationsstufe 21 gerade einen Mittelwert zwischen seinem Anfangswert und dem genannten Endwert annimmt. In diesem Fall wird die Frequenz des Oszillators nicht korrigiert.

Die beschriebene Schaltungsanordnung hat den Vorteil, daß bei einer Verringerung des Signal-Rausch-Abstands und bei anderen Empfangsbedingungen, die zufällige Fehler im Datensignal hervorrufen, der Betrag des Steuersignals für den steuerbaren Oszillator der Empfangsanordnung verringert wird. Dadurch wird auch in diesem Betriebsfall die Erzeugung fehlerhafter Steuersignale vermieden. Bei der gezeigten Schaltungsanordnung ist außerdem eine Begrenzung des Steuersignals und eine Proportionalregelung gewählt. Dadurch wird ermöglicht, daß die automatische Frequenzregelung unter keinen Umständen den Oszillator in einen Frequenzbereich außerhalb der empfangenen Eingangsfrequenzen, d.h. außerhalb der empfangenen Frequenzumtastung, regelt. Die Frequenztoleranz des ungeregelten Oszillators, bestimmt durch Fertigungsparameter und Temperatureinflüsse, ist dafür so klein zu wählen, daß sich die Frequenz des Oszillators den Eingangsfrequenzen nie weiter nähert, als es dem Regelbereich der automatischen Frequenzregelung entspricht. Insgesamt werden bei der erfindungsgemäßen Schaltungsanordnung die Anforderungen an den Oszillator gegenüber dem Stand der Technik geringer, so daß Fertigungskosten eingespart werden können.

Durch die Erfindung werden unüberschaubare Auswirkungen auf die Steuerung des Oszillators durch Betriebsbedingungen, die dem Fachmann als "Fading", "Multipath", "Simulcost", "Nachbarkanaleinwirkungen", "Blocking" usw. bekannt sind, durch die Begrenzung des Steuersignals verringert.

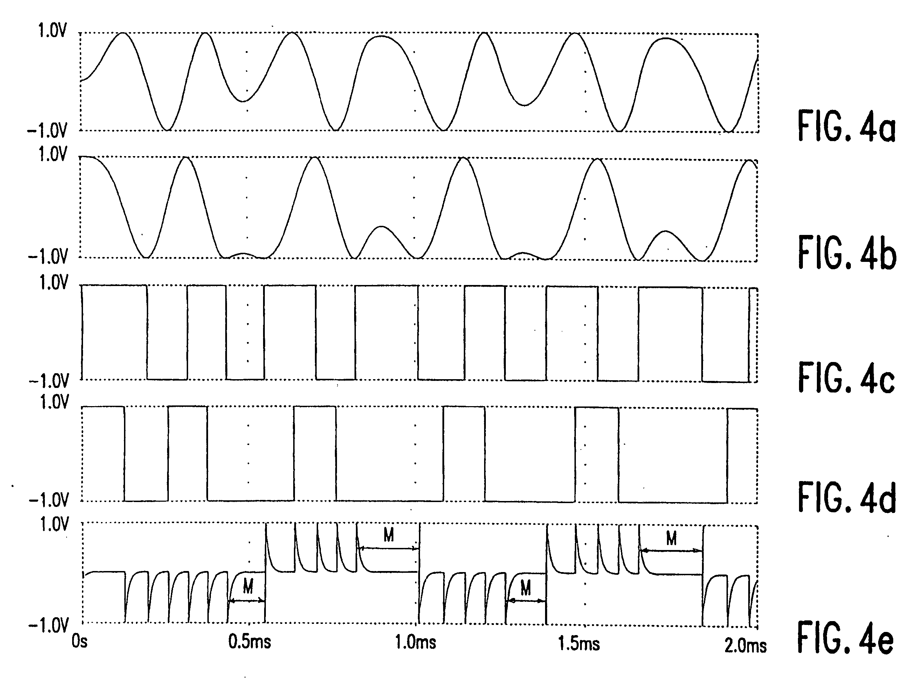

In Fig. 4 sind einige gemessene Signalverläufe eine mit der erfindungsgemäßen Schaltungsanordnung aufgebauten Empfangsanordnung dargestellt. Fig. 4 a) und b) zeigen zwei quadraturdemodulierte Schwingungen des Zwischenfrequenzsignals, deren Phasen wechselweise gemäß der Modulation mit einem zurückzugewinnenden Datensignal vor- bzw. nacheilen. In Fig. 4 c) und d) sind die Signale von Fig. 4a) bzw. b) in Rechtecksignale überführt, beispielsweise durch hochverstärkende Begrenzerverstärker. Fig. 4 e) zeigt ein daraus gewonnenes Demodulator-Impulssignal, welches dem Verlauf nach Fig. 2 g) entspricht. Darin sind die durch die Erfindung verworfenen Meßintervalle mit M gekennzeichnet.

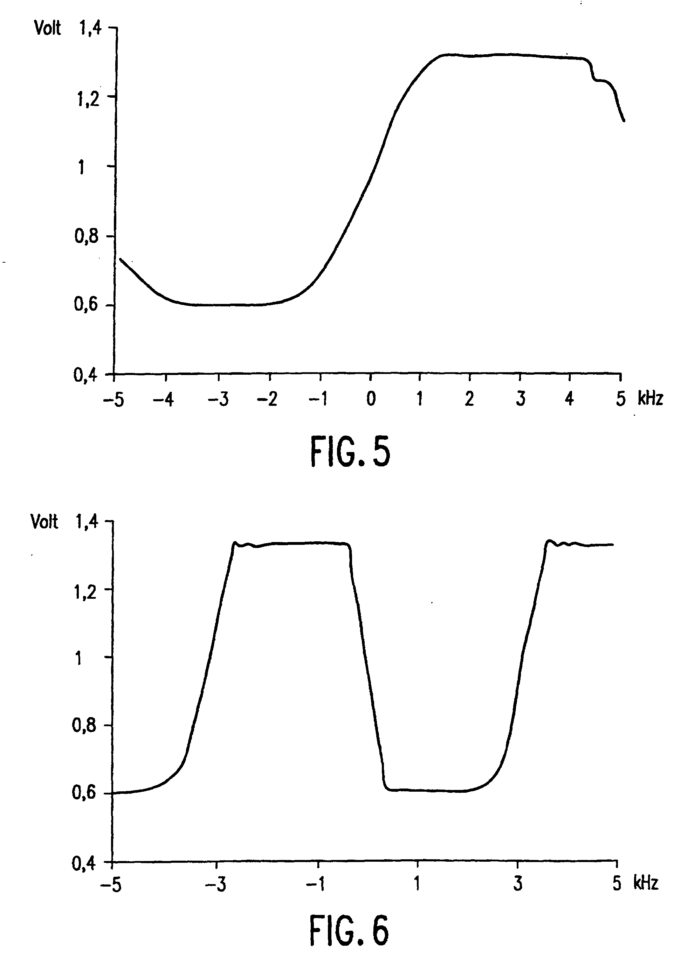

Die Figuren 5 und 6 zeigen für ein Dimensionierungsbeispiel der erfindungsgemäßen Schaltungsanordnung den funktionalen Zusammenhang zwischen der Frequenzabweichung der Frequenz des Oszillators von der Trägerfrequenz des Senders und dem Wert des durch die erfindungsgemäße Schaltungsanordnung erzeugten Steuersignals. Dieses ist dazu auf der Ordinate als Spannung am Ausgang 25 des RC-Tiefpasses 24 aufgetragen. Fig. 5 zeigt den Zusammenhang für ein moduliertes Eingangssignal, Fig. 6 den vergleichbaren Fall für ein unmoduliertes Eingangssignal.

Die Integrationsstufe 21 kann wahlweise mit einer programmierbaren Schaltungsanardnung realisiert werden, in der die Signalverarbeitungsschritte der Integrationsstufe in einem programmierten Signalverarbeitungsablauf durchgeführt werden.

## Patentansprüche

1. Schaltungsanordnung zum Erzeugen eines Steuersignals für einen steuerbaren Oszillator einer Empfangsanordnung, welche eingerichtet ist zum Herabmischen eines wenigstens zwei vorbestimmte Eingangsfrequenzen aufweisenden, FSK-modulierten Eingangssignals mit einer vom steuerbaren Oszillator abgegebenen Schwingung in ein Zwischenfrequenzsignal sowie zum Ableiten eines Datensignals, dessen Augenblickswert sich aus der auch als Zwischenfrequenz bezeichneten Frequenz des Zwischenfrequenzsignals bestimmt, und eines Demodulator-Impulssignals, dessen Frequenz und/oder Phase ein Maß für die Frequenz und/oder Phase des Zwischenfrequenzsignals ist, aus dem Zwischenfrequenzsignal, mit einem Steuersignal-Erzeugungszweig (17 bis 24) zum Ableiten des Steuersignals aus dem Demodulator-Impulssignal,
**gekennzeichnet durch**
- einen Unterbrechungssignal-Erzeugungszweig (33, 34, 35) zum Ableiten eines Unterbrechungssignals aus dem Datensignal während der Zeitintervalle, in denen dieses seinen Wert ändert, wobei der Unterbrechungssignal-Erzeugungszweig umfaßt:
-- eine Signaländerungs-Detektionsstufe (34, 35) zum Detektieren der Änderungen des Wertes des Datensignals, und
-- eine mit der Signaländerungs-Detektionsstufe gekoppelte Impulsformstufe (33) zum Bilden eines impulsförnügen, über die Zeitintervalle, in denen das Datensignal seinen Wert ändert, sich erstreckenden Unterbrechungssignals,
- sowie eine Unterbrechungsstufe (37) zum Unterdrücken des Ableitens eines Wertes für das Steuersignal aus dem Demodulator-Impulssignal beim Auftreten des Unterbrechungssignals.

2. Schaltungsanordnung nach Anspruch 1,
**gekennzeichnet durch** eine derartige Ausgestaltung, daß das Steuersignal **durch** zeitliche Mittelung einer Folge diskontinuierlich aus dem Demodulator-Impulssignal abgeleiteter Steuersignalwerte gebildet wird, und daß Steuersignalwerte aus den Zeitintervallen, in denen das Datensignal seinen Wert ändert, von der Mittelung ausgeschlossen werden.

3. Schaltungsanordnung nach Anspruch 2,
**gekennzeichnet durch** eine derartige Ausgestaltung, daß das Demodulator-Impulssignal eine Folge von Impulsen umfaßt, deren Folgefrequenz ein ganzzahliges Vielfaches der Zwischenfrequenz ist, und daß die Steuersignalwerte **durch** Messung des zeitlichen Abstandes aufeinanderfolgender Impulse gebildet werden.

4. Schaltungsanordnung nach Anspruch 3,
**gekennzeichnet durch** eine Integrationsstufe (21) zum Bilden je eines der Steuersignalwerte **durch** Integration eines Signals mit konstantem Pegel in je einem der Zeiträume zwischen je zwei aufeinanderfolgenden Impulsen des Demodulator-Impulssignals.

5. Schaltungsanordnung nach Anspruch 1,
**dadurch gekennzeichnet, daß** die Signaländerungs-Detektionsstufe (34, 35) eine Differenzierstufe (34) und eine dieser nachgeordnete Gleichrichterstufe (35) umfaßt.

6. Verwendung einer Schaltungsanordnung nach einem der vorhergehenden Ansprüche in einem Funkempfänger.

7. Verwendung einer Schaltungsanordnung nach einem der Ansprüche 1 bis 5 in einem Pager.

## Claims

1. A circuit arrangement for generating a control signal for a controllable oscillator of a receiving device, said circuit arrangement being arranged for mixing an FSK modulated input signal having at least two predetermined input frequencies with an oscillation supplied by the controllable oscillator, thus forming an intermediate-frequency signal, as well as for deriving from the intermediate-frequency signal a data signal whose instantaneous value follows from the frequency of the intermediate-frequency signal also called intermediate frequency, and for deriving from the intermediate-frequency signal a demodulator pulse signal whose frequency and/or phase is a measure of the frequency and/or the phase of the intermediate frequency signal, said circuit arrangement including a control signal generating branch (17 to 24) for deriving the control signal from the demodulator pulse signal, **characterized by**
- an interrupt signal generating branch (33, 34, 35) for deriving an interrupt signal from the data signal during the time intervals in which the data signal changes its value, where the interrupt signal generating branch comprises:
-- a signal transition detection stage (34, 35) for detecting the changes of the value of the data signal, and
-- a pulse forming stage (33) coupled to the signal transition detection stage (34, 35), for forming a pulse-shaped interrupt signal stretching out over the time intervals in which the data signal changes its value,
- as well as an interrupt stage (37) for suppressing the extraction of a value for the control signal from the demodulator pulse signal in response to the appearance of the interrupt signal.

2. A circuit arrangement as claimed in Claim 1, **characterized by** such a design that the control signal is formed by temporal averaging of a sequence of control signal values discontinuously derived from the demodulator pulse signal, and that control signal values stemming from the time intervals in which the data signal changes its value are excluded from the averaging operation.

3. A circuit arrangement as claimed in Claim 2, **characterized in that** the demodulator pulse signal contains a sequence of pulses whose repetition rate is an integer multiple of the intermediate frequency, and **in that** the control signal values are formed by measurement of the temporal distance between successive pulses.

4. A circuit arrangement as claimed in Claim 3, **characterized in that** it includes an integration stage (21) for forming one of the control signal values by integration of a signal having a constant level in a respective one of the time intervals between each two successive pulses of the demodulator pulse signal.

5. A circuit arrangement as claimed in claim 1, **characterized in that** the signal transition detection stage (34, 35) comprises differentiating stage (34) and a rectifier stage (35) arranged downstream of the latter.

6. Utilization of a circuit arrangement as claimed in any one of the preceding claims in a radio receiver.

7. Utilization of a circuit arrangement as claimed in any one of the claims 1 to 5 in a pager.

## Revendications

1. Circuit de production d'un signal de commande pour un oscillateur à commander d'un dispositif récepteur qui est agencé pour le mélange à la baisse d'un signal d'entrée à modulation MDF présentant au moins deux fréquences d'entrée préalablement déterminées avec une oscillation délivrée par l'oscillateur à commander ainsi que pour la déduction d'un signal de donnée dont la valeur instantanée se détermine à partir de la fréquence, désignée aussi comme fréquence intermédiaire, du signal de fréquence intermédiaire et un signal d'impulsion de démodulateur dont la fréquence et/ou la phase est une mesure de la fréquence et/ou de la phase du signal de fréquence intermédiaire à partir du signal de fréquence intermédiaire avec une branche de production du signal de commande (17 à 24) pour la déduction du signal de commande à partir du signal d'impulsion de démodulateur,
**caractérisé par**
- une branche de production du signal d'interruption (33, 34, 35) pour la déduction d'un signal d'interruption du signal de données pendant les intervalles temporels durant lesquels celui-ci change de valeur, la branche de production du signal d'interruption comprenant :
-- un étage de détection de variation du signal (34, 35) pour la détection des variations de valeur du signal de données et
-- un étage de forme d'impulsion (33) couplé à l'étage de détection de variation du signal pour la formation d'un signal d'interruption en forme d'impulsion s'étendant sur les intervalles temporels durant lesquels le signal de données change de valeur,
- ainsi qu'un étage d'interruption (37) pour la suppression de la déduction d'une valeur pour le signal de commande à partir du signal d'impulsion du démodulateur en cas d'apparition du signal d'interruption.

2. Circuit selon la revendication 1,
**caractérisé par** une conception telle que le signal de commande est formé par la moyenne temporelle d'une succession de valeurs de signaux de commande déduites de manière discontinue du signal d'impulsion du démodulateur et que des valeurs de signal de commande sont exclues par calcul d'une moyenne des intervalles temporels durant lesquels le signal de données change de valeur.

3. Circuit selon la revendication 2,
**caractérisé par** une conception telle que le signal d'impulsion du démodulateur comprend une succession d'impulsions dont la fréquence de répétition est un multiple entier de la fréquence intermédiaire et que les valeurs du signal de commande sont formées par la mesure de l'intervalle temporel d'impulsions successives.

4. Circuit selon la revendication 3,
**caractérisé par** un étage d'intégration (21) pour la formation d'une des valeurs respectives du signal de commande par intégration d'un signal avec un niveau constant dans l'un des intervalles respectifs entre deux impulsions successives du signal d'impulsion du démodulateur.

5. Circuit selon la revendication 1,
**caractérisé en ce que** l'étage de détection de variation du signal (34, 35) comprend un étage de différenciation (34) et un étage redresseur (35) en aval de celui-ci.

6. Utilisation d'un circuit selon l'une des revendications précédentes dans un récepteur radio.

7. Utilisation d'un circuit selon l'une des revendications 1 à 5 dans un pager.
